# EUROPEAN PATENT SPECIFICATION

(11) **EP 4 280 346 B1**
(45) Date of publication and mention of the grant of the patent: **25.06.2025**
(21) Application number: 22739511.8
(22) Date of filing: 14.01.2022
(51) Int. Cl.: H01M 10/613, H01M 10/625, H01M 10/6555, H01M 10/658, H01M 50/20, H01M 50/204, F16L 59/02

(54) **HEAT TRANSFER SUPPRESSION SHEET FOR BATTERY PACK, AND BATTERY PACK**
WÄRMEÜBERTRAGUNGSUNTERDRÜCKUNGSFOLIE FÜR BATTERIEPACK UND BATTERIEPACK
FEUILLE DE SUPPRESSION DE TRANSFERT DE CHALEUR POUR BLOC-BATTERIE, ET BLOC-BATTERIE

(30) Priority: 18.01.2021 JP 2021006045
(43) Date of publication of application: 22.11.2023
(73) Proprietor: IBIDEN Co., Ltd., Gifu 503-8604 (JP)
(72) Inventor: ANDO, Hisashi, Ibi-gun, Gifu 501-0695 (JP); TAKAHASHI, Naoki, Ibi-gun, Gifu 501-0695 (JP)
(74) Representative: Hoffmann Eitle
(86) International application number: PCT/JP2022/001239
(87) International publication number: WO 2022/154106

(56) References cited:
- WO-A1-2020/111042
- JP-A- 2019 204 636
- JP-A- 2019 204 637
- JP-A- 2020 072 004

## Description

### TECHNICAL FIELD

The present invention relates to a heat transfer suppression sheet for a battery pack, which is suitably used for a battery pack serving as a power source for an electric motor that drives an electric vehicle or a hybrid vehicle, for example, and a battery pack using the heat transfer suppression sheet for a battery pack.

### BACKGROUND ART

In recent years, from the viewpoint of environmental protection, electric vehicles or hybrid vehicles driven by electric motors have been actively developed. The electric vehicle or the hybrid vehicle is equipped with a battery pack in which battery cells are connected in series or in parallel to serve as a power source for an electric drive motor.

For the battery cell, a lithium-ion secondary battery capable of high capacity and high output is mainly used as compared with a lead-acid battery, a nickel-metal hydride battery, and the like, but when thermal runaway occurs in one battery cell due to an internal short circuit, an overcharge, or the like in the battery (that is, in the case of "abnormality"), propagation of heat to other adjacent battery cells may cause thermal runaway of the other adjacent battery cells.

For example, JP 2015-211013 A discloses a power storage device that can achieve effective heat insulation between power storage elements such as lithium-ion secondary batteries. In the power storage device described in JP 2015-211013 A, a first plate member and a second plate member are disposed between a first power storage element and a second power storage element adjacent to each other. Between the first plate member and the second plate member, a low thermal conductive layer, which is a layer of a substance having a lower thermal conductivity than that of the first plate member and the second plate member, is formed.

In the power storage device according to JP 2015-211013 A configured as described above, radiant heat from the first power storage element to the second power storage element or radiant heat from the second power storage element to the first power storage element is blocked by the first plate member and the second plate member. Heat transfer from one plate member to another plate member is also suppressed by the low thermal conductive layer.

However, in the power storage device, since only a heat-insulating layer is provided between the first power storage element and the second power storage element, it is impossible to effectively cool the battery cell that generates heat during a charge and discharge cycle.

Therefore, JP 2019-175806 A proposes a heat-absorbing sheet for a battery pack that can cool individual battery cells during normal use while suppressing propagation of heat between the battery cells when an abnormality occurs. The heat-absorbing sheet described in JP 2019-175806 A contains two or more substances having different dehydration temperatures. At least one of the two or more substances can be dehydrated during normal use of the battery cell, and at least one other substance can be dehydrated when the battery cell is abnormal.

JP 2020-72004 A relates to a heat transfer suppressing sheet comprising a flat sheet and a corrugated sheet, wherein the heat transfer suppressing sheet is arranged between a plurality of battery cells that form an assembled battery.

JP 2019-204637 A describes a heat transfer suppression sheet which has a heat transfer suppression layer containing inorganic particles and/or inorganic fibers, wherein the heat transfer suppression layer has a quadrangular outer shape in plan view, and has linear grooves interconnecting only one set of end faces which oppose among four end faces in the in-plane direction of the heat transfer suppression layer, and the surface of the grooves has an irregular shape.

JP 2019-204636 A describes a heat transfer suppression sheet which has a heat transfer suppression layer containing inorganic particles and/or inorganic fibers, wherein the heat transfer suppression layer has grooves communicating with the end faces in the in-plane direction in the heat transfer suppression layer, and the surface of the grooves has an irregular shape.

WO 2020/111042 A1 describes an electric power storage module which includes a plurality of storage devices arranged along a first direction and a separator that is disposed between two adjacent storage devices and insulates a space between the two storage devices. Each storage device includes an outer can having an opening, a sealing plate that blocks the opening, and a joint section where the outer can and the sealing plate are joined. The separator has an abutting region that contacts a surface of the outer cans facing in the first direction, and a separated region that overlaps the joint sections when viewed from the first direction and that is recessed in a direction away from the outer cans than the abutting region.

### SUMMARY OF INVENTION

### TECHNICAL PROBLEM

When battery cells assembled into a battery pack are subjected to a charge and discharge cycle (that is, in the case of "during normal use"), in order to sufficiently exhibit the charge and discharge performance of the battery cells, it is necessary to maintain the surface temperature of the battery cells at a predetermined value or lower (for example, 150°C or less).

When an abnormal situation occurs in which the temperature of the battery cells is, for example, 200°C or more, it is necessary to effectively cool the battery cells.

As described above, there is a recent demand for further improvements in a heat transfer suppression means capable of maintaining the surface temperature of battery cells during normal use and capable of effectively cooling the battery cells when an abnormality of high temperature occurs.

The present invention has been made in view of the above problems, and an object of the present invention is to provide a battery pack and a heat transfer suppression sheet for a battery pack that is used in a battery pack in which battery cells are connected in series or in parallel, and that can cool the individual battery cells during normal use while suppressing propagation of heat between the battery cells when an abnormality occurs.

### SOLUTION TO PROBLEM

The above object of the present invention is achieved by a heat transfer suppression sheet for a battery pack according to independent claim 1.

Preferred embodiments of the present invention relating to the heat transfer suppression sheet for a battery pack are defined in the dependent claims.

At least one of the inorganic particles or the inorganic fibers contained in the heat-insulating material may contain a material that releases moisture when heated.

The covering material may be formed of a polymer film or a metal plate.

The above object of the present invention is also achieved by a battery pack as defined in claim 4.

### ADVANTAGEOUS EFFECTS OF INVENTION

The heat transfer suppression sheet for a battery pack of the present invention is a heat transfer suppression sheet used in a battery pack in which battery cells are connected in series or in parallel, a gap is formed between the heat-insulating material and the covering material, and the gap communicates with the outside of the heat-insulating material and the covering material. Therefore, during normal use of the battery pack, moisture can be evaporated from the heat-insulating material, and at this time, the battery cells can be effectively cooled by utilizing the heat of vaporization.

Since the gap communicates with the outside of the heat-insulating material and the covering material, when the battery pack is abnormal, the heated steam is discharged to the outside through a communication opening. Therefore, it is possible to suppress propagation of heat between the battery cells.

In the battery pack of the present invention, since the heat transfer suppression sheet is interposed between battery cells, the individual battery cells can be cooled during normal use, propagation of heat between the battery cells can be suppressed when an abnormality occurs, and the chain of thermal runaway can be prevented.

### BRIEF DESCRIPTION OF DRAWINGS

[Fig. 1] Fig. 1 is a cross-sectional view schematically showing a heat transfer suppression sheet for a battery pack according to a first embodiment.
[Fig. 2] Fig. 2 is a plan view schematically showing a heat-insulating material used in the heat transfer suppression sheet for a battery pack according to the first embodiment.
[Fig. 3] Fig. 3 is a cross-sectional view schematically showing a battery pack to which the heat transfer suppression sheet for a battery pack according to the first embodiment is applied.
[Fig. 4] Fig. 4 is a cross-sectional view schematically showing a heat transfer suppression sheet for a battery pack according to a second embodiment.
[Fig. 5] Fig. 5 is a cross-sectional view schematically showing a heat transfer suppression sheet for a battery pack according to a third embodiment.
[Fig. 6] Fig. 6 is a plan view schematically showing another example of the heat-insulating material used in the heat transfer suppression sheets for a battery pack according to the first to third embodiments.
[Fig. 7] Fig. 7 is a plan view schematically showing still another example of the heat-insulating material used in the heat transfer suppression sheets for a battery pack according to the first to third embodiments.

### DESCRIPTION OF EMBODIMENTS

The present inventors have intensively studied to provide a heat transfer suppression sheet for a battery pack that can cool individual battery cells during normal use in which relatively low-temperature heat is generated while suppressing propagation of heat between the battery cells in the case of abnormality in which high-temperature heat is generated.

As a result, the present inventors have found that when a gap is formed between the heat-insulating material and the covering material and the gap communicates with the outside of the heat-insulating material and the covering material, the above problems can be solved during normal use and in the case of abnormality.

That is, during normal use in which the temperature of the battery cells is relatively low, for example, 60°C or less, since the air existing in the gap provides a heat insulation effect, and the air with an increased temperature is discharged to the outside, the battery cell can be effectively cooled.

When an abnormality occurs in which the temperature of the battery cells is high, the moisture contained in the heat-insulating material is evaporated, the heat-insulating material is cooled by the heat of vaporization, the heated steam is discharged to the outside through the gap, and thus propagation of heat between the battery cells can be suppressed.

Hereinafter, embodiments of the present invention will be described in detail with reference to the drawings.

In the following description, "to" means that the value is equal to or larger than a lower limit value and equal to or smaller than an upper limit value.

### [1. Heat transfer suppression sheet for battery pack]

Hereinafter, a heat transfer suppression sheet for a battery pack according to the present embodiment will be described in order from a first embodiment to a third embodiment. Then, another example of a heat-insulating material according to the present embodiment, a heat-insulating material, a covering material, and the like constituting the heat transfer suppression sheet for a battery pack according to the present embodiment will be described. Further, a method for manufacturing the heat transfer suppression sheet for a battery pack according to the present embodiment will be described.

### <First Embodiment>

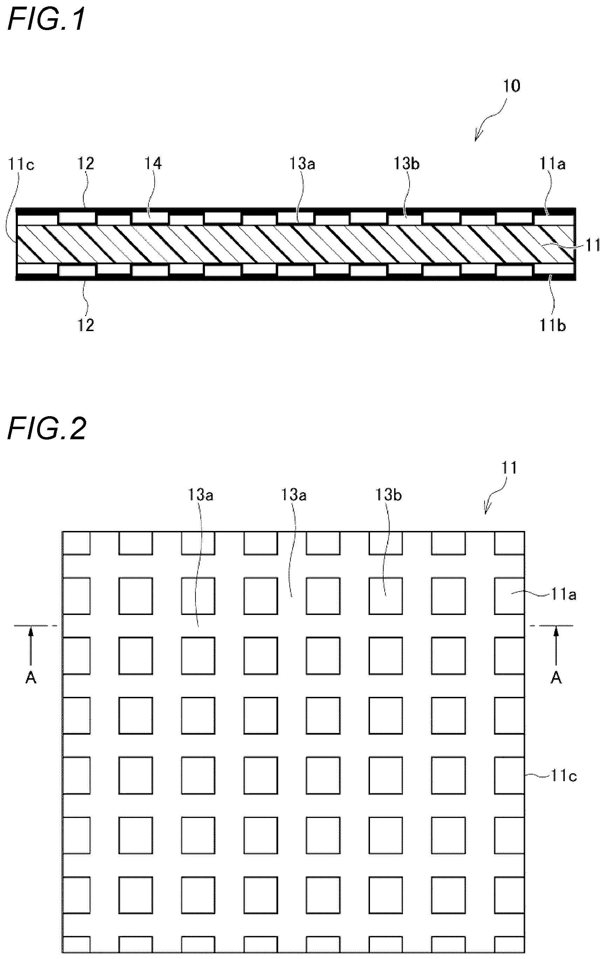

Fig. 1 is a cross-sectional view schematically showing a heat transfer suppression sheet for a battery pack according to the first embodiment. Fig. 2 is a plan view schematically showing a heat-insulating material used in the heat transfer suppression sheet for a battery pack according to the first embodiment. Fig. 1 is a cross-sectional view taken along a line A-A when a heat transfer suppression sheet 10 is manufactured using a heat-insulating material 11 shown in Fig. 2. Hereinafter, the heat transfer suppression sheet 10 for a battery pack may be simply referred to as the heat transfer suppression sheet 10.

The heat transfer suppression sheet 10 for a battery pack according to the present embodiment includes the heat-insulating material 11, and covering materials 12 covering a surface 11a and a back surface 11b which are main surfaces of the heat-insulating material 11. In the present embodiment, the covering material 12 does not cover end surfaces 11c of the heat-insulating material 11. As will be described later, when the heat transfer suppression sheet 10 and battery cells are laminated, the surface 11a and the back surface 11b of the heat-insulating material 11 refer to surfaces facing the battery cells, and the end surfaces 11c refer to four surfaces parallel to a thickness direction of the heat transfer suppression sheet 10.

The heat-insulating material 11 contains, for example, inorganic particles and inorganic fibers containing crystal water or adsorbed water, and the crystal water or the adsorbed water has the property of releasing moisture when heated. As shown in Figs. 1 and 2, on the surface 11a of the heat-insulating material 11, groove-shaped concave portions 13a are formed to cross at equal intervals in two directions parallel to two pairs of sides of the heat-insulating material. A region where the concave portions 13a are not formed substantially constitutes convex portions 13b.

The covering material 12 is, for example, a film, and the convex portion 13b of the heat-insulating material 11 is bonded to the covering material 12 with an adhesive (not shown). Since the region where the concave portions 13a are formed is not in contact with the covering material 12, as a result, gaps 14 are formed between the heat-insulating material 11 and the covering material 12. Since the concave portions 13a are formed to reach the end surfaces 11c in four directions of the heat-insulating material 11, the gaps 14 communicate with the outside of the heat-insulating material 11 and the covering material 12, that is, the outside of the heat transfer suppression sheet 10.

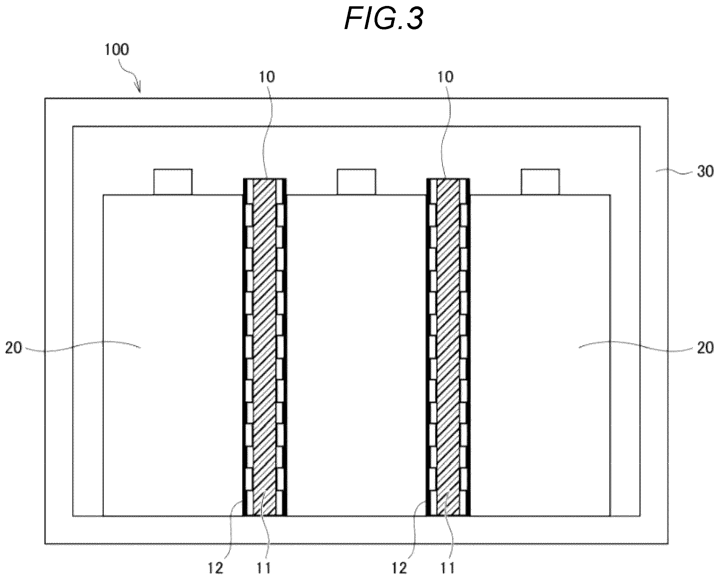

Fig. 3 is a cross-sectional view schematically showing a battery pack to which the heat transfer suppression sheet for a battery pack according to the first embodiment is applied. A battery pack 100 includes a battery case 30, battery cells 20 housed in the battery case 30, and the heat transfer suppression sheets 10 interposed between the battery cells 20. battery cells 20 are connected in series or in parallel by a bus bar (not shown) or the like.

The battery cell 20 is preferably, for example, a lithium-ion secondary battery, but is not particularly limited thereto, and may be applied to other secondary batteries.

In the heat transfer suppression sheet 10 configured as described above, when the temperature rises in a relatively low-temperature range from room temperature (about 20°C) to about 60°C, which is a temperature range of the battery cell 20 during normal use, heat is also propagated to the heat-insulating material 11. In the present embodiment, the heat-insulating material 11 has the gap 14, and since air exists in the gap 14, the heat generated from the battery cell 20 can be suppressed from propagating.

As the temperature rises, the temperature of the air in the gap 14 also increases, but since the gap 14 communicates with the outside of the heat transfer suppression sheet 10, heated air is discharged to the outside of the heat transfer suppression sheet 10. As a result, since new air is constantly introduced into the gap 14, an increase in the temperature of the heat transfer suppression sheet 10 can be suppressed, and an increase in the temperature of the battery cell 20 can also be suppressed.

When the temperature of the battery cell 20 rises abnormally, high-temperature heat is further propagated to the heat-insulating material 11. In the present embodiment, since the heat-insulating material 11 contains inorganic particles containing the crystal water or the adsorbed water, and the crystal water or the adsorbed water is a material that releases moisture when heated, moisture is evaporated from the inorganic particles when the heat-insulating material 11 is heated. At this time, since the heat-insulating material 11 is cooled by losing the heat of vaporization, the heat transfer suppression sheet 10 can cool the battery cell 20.

Since high-temperature steam does not stay in the gap 14 and is discharged to the outside of the heat transfer suppression sheet 10 from the end surface 11c of the heat-insulating material 11, the heat transfer suppression sheet 10 can cool the battery cell 20 more effectively.

When the use (that is, charge and discharge) of the battery pack 100 is stopped after the battery cell 20 is effectively cooled, the water vapor remaining in the gap 14 is cooled and forms water droplets, which are absorbed into the heat-insulating material 11 over time. Then, when the battery pack 100 is used next time, the moisture in the heat-insulating material 11 is evaporated again, the heat-insulating material 11 loses the heat of vaporization, and thus the battery cell 20 can be cooled.

### <Second Embodiment>

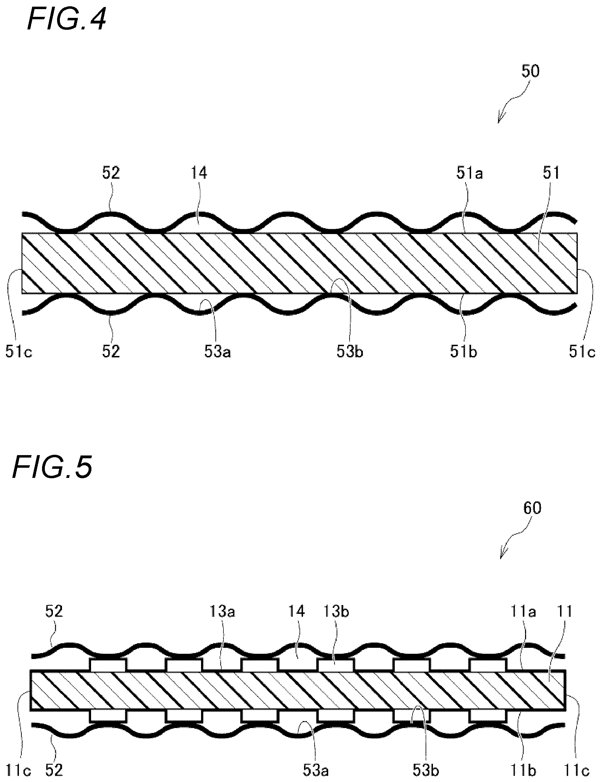

Fig. 4 is a cross-sectional view schematically showing a heat transfer suppression sheet for a battery pack according to a second embodiment.

In Figs. 4 and 5 showing the following second and third embodiments, the same or equivalent parts as those in the first embodiment are denoted by the same reference numerals in the drawings, and the description thereof is omitted or simplified. Since all the embodiments described below can be used in place of the heat transfer suppression sheet 10 described in the battery pack 100 shown in Fig. 3, effects and the like will be described assuming that the heat transfer suppression sheets according to the second and third embodiments are applied to the battery pack 100.

A heat transfer suppression sheet 50 for a battery pack according to the second embodiment includes a heat-insulating material 51, and covering materials 52 covering a surface 51a and a back surface 51b of the heat-insulating material 51. As in the first embodiment, the covering material 52 does not cover end surfaces 51c of the heat-insulating material 51.

In the third embodiment, the surface 51a and the back surface 51b of the heat-insulating material 51 are flat, and no concave portions or convex portions are formed. On the other hand, the covering material 52 is made of a film, and the entire surface thereof is processed to be uneven. On a surface facing the heat-insulating material 51 in the covering material 52, concave portions 53a recessed in a groove shape in a direction away from the heat-insulating material 51 and convex portions 53b protruding toward the heat-insulating material 51 are formed. The convex portion 53b of the covering material 52 is bonded to the heat-insulating material 51 with an adhesive (not shown), and gaps 14 are formed between the concave portions 53a and the heat-insulating material 51.

In the heat transfer suppression sheet 50 configured as described above, since the gap 14 communicates with the outside of the heat transfer suppression sheet 50, the same effects as those of the first embodiment can also be obtained during normal use and when an abnormality occurs. When the heat transfer suppression sheet 50 is configured using the covering material 52 shown in the second embodiment, since the covering material 52 made of a film is easy to process, the concave portion 53a and the convex portion 53b having desired shapes can be easily formed.

### <Third Embodiment>

Fig. 5 is a cross-sectional view schematically showing the heat transfer suppression sheet for a battery pack according to the third embodiment.

A heat transfer suppression sheet 60 for a battery pack according to the third embodiment includes the heat-insulating material 11, and the covering materials 52 covering the surface 11a and the back surface 11b of the heat-insulating material 11. As in the first and second embodiments, the covering material 52 does not cover the end surfaces 11c of the heat-insulating material 11.

In the present embodiment, as in the first embodiment, the concave portions 13a and the convex portions 13b are formed in the heat-insulating material 11. Similar to the second embodiment, on a surface facing the heat-insulating material 11 in the covering material 52, the concave portions 53a recessed in a groove shape in a direction away from the heat-insulating material 11, and the convex portions 53b protruding toward the heat-insulating material 11 are formed.

In the present embodiment, the shape of the covering material 52 is designed such that, when the heat-insulating material 11 is bonded to the covering material 52, the groove-shaped concave portion 53a of the covering material 52 and the groove-shaped concave portion 13a of the heat-insulating material 11 are aligned with each other, and the convex portion 53b of the covering material 52 and the convex portion 13b of the heat-insulating material 11 are aligned with each other.

The convex portion 53b of the covering material 52 is bonded to the convex portion 13b of the heat-insulating material 11 with an adhesive (not shown), and the gaps 14 are formed between the concave portions 53a of the covering material 52 and the concave portions 13a of the heat-insulating material 11.

In the heat transfer suppression sheet 60 configured as described above, the same effects as those of the first and second embodiments can also be obtained during normal use and when an abnormality occurs. Since the gap 14 is formed by the concave portion 13a and the concave portion 53a, a volume of the gap 14 is increased as compared with the heat transfer suppression sheets according to the first and second embodiments. Therefore, the temperature of the air in the gap 14 is less likely to increase, and a heat insulation effect of the heat transfer suppression sheet 60 is improved. Since heated air and high-temperature steam move more easily, an effect of cooling the battery cell 20 can be further improved.

In the second and third embodiments, shapes of the groove-shaped concave portion 53a and convex portion 53b of the covering material 52 are the same as, for example, a shape of the surface of the heat-insulating material 11 shown in Fig. 5, but the present invention is not limited thereto. For example, a wave-type covering material having grooves extending only in a pair of side directions of a heat-insulating material, or a wave-type covering material having grooves extending in diagonal directions of a heat-insulating material can also be used.

In the above first to third embodiments, the covering materials are disposed only on the surface and the back surface of the heat-insulating material, but the covering material may cover a part of a cross section or the entire cross section in addition to the surface and the back surface of the heat-insulating material. However, it is necessary to set the shape of the gap or form an opening in a part of the covering material such that at least a part of the gaps formed between the covering material and the heat-insulating material communicate with the outside of the heat transfer suppression sheet.

As described above, the heat transfer suppression sheets for a battery pack according to the first to third embodiments have been described in order. In the first to third embodiments, an example using the heat-insulating material 11 shown in Fig. 2 has been given, but the shape of the heat-insulating material is not particularly limited, and for example, heat-insulating materials having concave portions of various shapes shown below can be used.

Next, another example of the heat-insulating material used in the heat transfer suppression sheets for a battery pack according to the first to third embodiments will be described.

### <Another Example of Heat-insulating material>

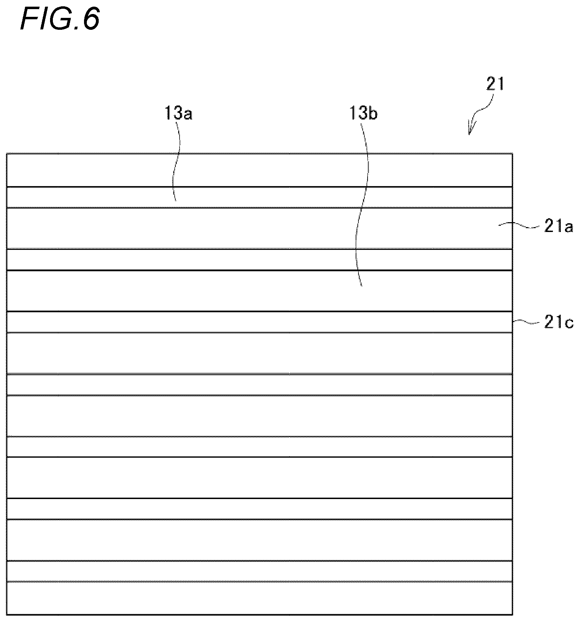

Fig. 6 is a plan view schematically showing another example of the heat-insulating material used in the heat transfer suppression sheets for a battery pack according to the first to third embodiments.

As shown in Fig. 6, groove-shaped concave portions 13a extending in a direction parallel to one side of a heat-insulating material 21 are formed at equal intervals on a surface 21a of the heat-insulating material 21, and a region where the concave portions 13a are not formed substantially constitute the convex portions 13b. Since the concave portion 13a is formed to reach end surfaces 21c of the heat-insulating material 21, when a covering material is bonded to the surface 21a of the heat-insulating material 21, the gap communicates with the outside of the heat transfer suppression sheet.

The heat-insulating material 21 configured as described above can also be applied to the heat transfer suppression sheets for a battery pack according to the first to third embodiments, and the same effects as those of the first to third embodiments can be obtained.

### <Still Another Example of Heat-insulating material>

In the heat-insulating material 11 shown in Fig. 2 and the heat-insulating material 21 shown in Fig. 6, all the concave portions 13a reach end portions of the heat-insulating material, and all the gaps formed between the heat-insulating material and the covering material have a structure communicating with the outside, but the present invention is not limited thereto.

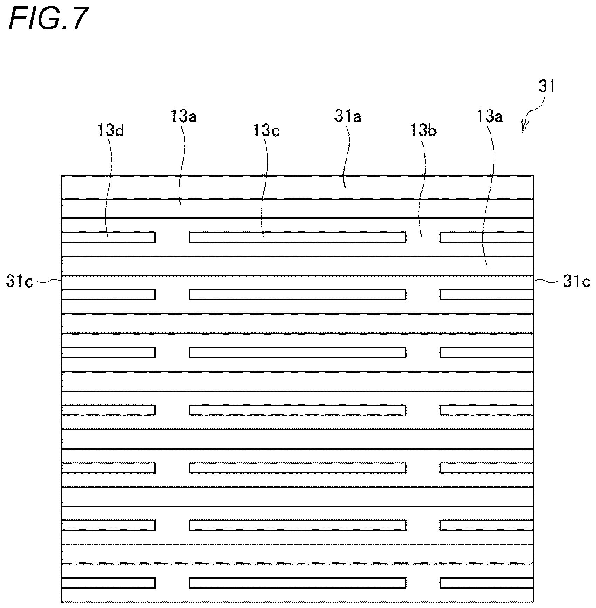

Fig. 7 is a plan view schematically showing still another example of the heat-insulating material used in the heat transfer suppression sheets for a battery pack according to the first to third embodiments.

As shown in Fig. 7, groove-shaped concave portions 13a extending in one direction are regularly formed on a surface 31a of a heat-insulating material 31, and the concave portion 13a reaches a pair of end surfaces 31c facing each other of the heat-insulating material 31. A groove-shaped concave portion 13c and groove-shaped concave portions 13d extending in the same direction as the concave portion 13a are formed between the adjacent concave portions 13a. Both end portions of the concave portion 13c do not reach the end surface 31c of the heat-insulating material 31, and when a covering material is bonded to the surface 31a of the heat-insulating material 31, a gap formed between the concave portion 13c and the covering material does not communicate with the outside of the heat transfer suppression sheet.

In the concave portion 13d, one end portion reaches the end surface 31c of the heat-insulating material 31, and the other end portion does not reach the end surface 31c of the heat-insulating material 31. Therefore, when a covering material is bonded to the surface 31a of the heat-insulating material 31, a gap formed between the concave portion 13d and the covering material communicates with the outside of the heat transfer suppression sheet.

In a heat transfer suppression sheet using the heat-insulating material 31 configured as described above, since the gaps formed between the concave portions 13a and 13d and the covering material communicate with the outside of the heat transfer suppression sheet, the same effects as those of the first to third embodiments can be obtained.

Since the gap formed between the concave portion 13c and the covering material does not communicate with the outside, heated air or high-temperature steam is not discharged to the outside and stays in the gap. However, when charge and discharge of the battery pack 100 are stopped and the battery cell 20 is cooled, the steam staying in the gap is also cooled and forms water droplets, which are absorbed into the heat-insulating material 31 over time. Therefore, when the battery pack 100 is used next time, the moisture in the heat-insulating material 31 can be evaporated again, and thus a cooling effect due to the heat of vaporization can be maintained.

Next, the heat-insulating material, the covering material, the adhesive constituting the heat transfer suppression sheet for a battery pack according to the present embodiment and a thickness of the heat transfer suppression sheet will be described in detail.

### <Heat-insulating material>

The heat-insulating material used in the heat transfer suppression sheet for a battery pack according to the present embodiment contains at least one of inorganic particles or inorganic fibers.

The inorganic particles are preferably inorganic hydrates or hydrous porous materials. The inorganic hydrates receive heat from the battery cell 20, thermally decompose when the temperature is equal to or higher than a thermal decomposition start temperature, and release crystal water thereof, thereby cooling the battery cell 20. The inorganic hydrates form porous bodies after releasing the crystal water, and an effective heat insulation effect can be obtained due to a large number of air holes.

As the inorganic particles, a single kind of inorganic particles may be used, or two or more kinds of inorganic hydrate particles may be used in combination. Since the inorganic hydrates have different thermal decomposition start temperatures depending on their kinds, the battery cell 20 can be cooled in multiple stages by using two or more kinds of inorganic hydrate particles in combination.

Specific examples of the inorganic hydrates include aluminum hydroxide (Al(OH)₃), magnesium hydroxide (Mg(OH)₂), calcium hydroxide (Ca(OH)₂), zinc hydroxide (Zn(OH)₂), iron hydroxide (Fe(OH)₂), manganese hydroxide (Mn(OH)₂), zirconium hydroxide (Zr(OH)₂), gallium hydroxide (Ga(OH)₃), and the like.

Examples of the fibrous inorganic hydrates include fibrous calcium silicate hydrates.

Specific examples of the hydrous porous materials include zeolite, kaolinite, montmorillonite, acid clay, diatomaceous earth, sepiolite, wet silica, dry silica, aerogel, mica, vermiculite, and the like.

Examples of the inorganic fibers include alumina fibers, silica fibers, alumina silicate fibers, rock wool, magnesium silicate fibers, alkaline earth silicate fibers, glass fibers, zirconia fibers, potassium titanate fibers, and the like. Among these inorganic fibers, magnesium silicate fibers can be suitably used as a material that releases moisture when heated.

As the inorganic fibers, a single kind of inorganic fibers may be used, or two or more kinds of inorganic fibers may be used in combination.

In addition to the inorganic particles and the inorganic fibers, organic fibers, organic binders, or the like may be blended into the heat-insulating material as necessary. The organic fibers and the organic binders are useful for reinforcing the heat-insulating material and improving the moldability thereof.

The inorganic particles and the inorganic fibers contained in the heat-insulating material do not necessarily contain a material that releases moisture when heated. During the manufacture of the heat-insulating material, a small amount of moisture is inevitably contained, and therefore, in a case where the temperature of the battery cell 20 rises during normal use and when an abnormality occurs, the moisture contained in the heat-insulating material evaporates, thereby obtaining an effect of cooling the battery cell 20.

In the present embodiment, the heat-insulating material may contain at least one of the inorganic particles or the inorganic fibers, and with respect to a total mass of the heat transfer suppression sheet, a content of the inorganic particles is preferably 20% or more by mass and 80% or less by mass, and a content of the inorganic fibers is preferably 5% or more by mass and 70% or less by mass. By setting the contents as described above, the shape retention, the pressing force resistance, and the wind pressure resistance can be improved by the inorganic fibers, and the retention capacity of the inorganic particles can be secured.

Organic fibers, organic binders, or the like may be blended into the heat transfer suppression sheet according to the present embodiment as necessary. The organic fibers and the organic binders are useful for reinforcing the heat transfer suppression sheet and improving the moldability thereof.

### <Covering material>

As the covering material, a polymer film or a metal film (metal plate) can be used.

Examples of the polymer film include polyimide, polycarbonate, PET, p-phenylene sulfide, polyetherimide, cross-linked polyethylene, flame-retardant chloroprene rubber, polyvinylidene fluoride, rigid vinyl chloride, polybutylene terephthalate, PTFE, PFA, FEP, ETFE, rigid PCV, flame-retardant PET, polystyrene, polyether sulfone, polyamide-imide, polyacrylonitrile, polyethylene, polypropylene, polyamide, and the like.

Examples of the metal film include aluminum foil, stainless steel foil, and copper foil.

Among the polymer films and the metal films exemplified above, for example, when a polyimide film, aluminum foil, or the like is used, the shape of the covering material can be maintained even at a high temperature, which is preferable.

### <Adhesive>

In the present embodiment, an adhesive can be used as a method of bonding the heat-insulating material to the covering material.

Examples of the adhesive include those using urethane, polyethylene, polypropylene, polystyrene, nylon, polyester, vinyl chloride, vinylon, acrylic resin, silicone, and the like as a raw material.

### <Thickness of Heat Transfer Suppression Sheet>

In the present embodiment, the thickness of the heat transfer suppression sheet is not particularly limited, but is preferably in a range of 0.05 mm to 6 mm. If the thickness of the heat transfer suppression sheet is less than 0.05 mm, sufficient mechanical strength cannot be imparted to the heat transfer suppression sheet. On the other hand, if the thickness of the heat transfer suppression sheet exceeds 6 mm, it may be difficult to form the heat transfer suppression sheet.

Next, the method for manufacturing the heat transfer suppression sheet for a battery pack according to the present embodiment will be described.

### <Method for Manufacturing Heat Transfer Suppression Sheet>

The heat-insulating material used in the heat transfer suppression sheet according to the present embodiment can be manufactured by molding a material containing at least one of inorganic particles or inorganic fibers by a dry molding method or a wet molding method, for example. As the dry molding method, for example, a press molding method (dry press molding method) and an extrusion molding method (dry extrusion molding method) can be used.

### (Method for Manufacturing Heat-insulating material Using Dry Press Molding Method)

In the dry press molding method, inorganic particles and inorganic fibers, and, if necessary, organic fibers, organic binders, and the like are put into a mixer such as a V-shaped mixer at a predetermined ratio. Then, after the materials put into the mixer are sufficiently mixed, the mixture is put into a predetermined mold and press-molded to obtain a heat-insulating material. During press molding, heating may be performed as necessary.

A heat-insulating material having concave portions and convex portions can be formed by, for example, a pressing method using a mold having a concave and convex shape during press molding.

A press pressure during press molding is preferably in a range of 0.98 MPa or more and 9.80 MPa or less. If the press pressure is less than 0.98 MPa, the strength of the obtained heat-insulating material may not be secured and the heat-insulating material may collapse. On the other hand, if the press pressure exceeds 9.80 MPa, the workability may be deteriorated due to excessive compression, or due to an increase in the bulk density, solid heat transfer may increase and heat insulating properties may be decreased.

In the case of using the dry press molding method, it is preferable to use an ethylene-vinyl acetate copolymer (EVA) as the organic binder, but any organic binder that is generally used in the case of using the dry press molding method can be used without particular limitation.

### (Method for Manufacturing Heat-insulating material Using Dry Extrusion Molding Method)

In the dry extrusion molding method, a paste is prepared by adding water to inorganic particles and inorganic fibers and, if necessary, organic fibers and organic binders as binders, followed by kneading the mixture with a kneader. Then, the obtained paste is extruded from a slit-shaped nozzle using an extruder and further dried to obtain a heat-insulating material. In the case of using the dry extrusion molding method, it is preferable to use methylcellulose, water-soluble cellulose ether, or the like as the organic binder, but any organic binder that is generally used in the case of using the dry extrusion molding method can be used without particular limitation.

As a method for manufacturing the heat-insulating material 21 shown in Fig. 6 by the dry extrusion molding method, a method of extruding the above paste as a raw material from a slit-shaped nozzle having a desired groove shape can be exemplified. As a result, it is possible to manufacture the heat-insulating material 21 having the groove-shaped concave portions 13a and the convex portions 13b.

As a method for manufacturing the heat-insulating material 31 shown in Fig. 7 by the dry extrusion molding method, a method of extruding the above paste as a raw material from a slit-shaped nozzle having a desired groove shape and further scraping a surface of a sheet before drying obtained by the extrusion into a desired uneven shape can be exemplified.

### (Method for Manufacturing Heat-insulating material Using Wet Molding Method)

In the wet molding method, inorganic particles and inorganic fibers, and, if necessary, organic binders as binders, are mixed in water, and stirred with a stirrer to prepare a mixed solution. Then, the obtained mixed solution is poured into a molding machine having a mesh for filtration formed on a bottom surface, and the mixed solution is dehydrated through the mesh, whereby a wet sheet is prepared. Thereafter, the obtained wet sheet is heated and pressurized, whereby a heat-insulating material can be obtained.

Before the heating and pressurizing step, a ventilation drying treatment may be performed in which hot air is passed through the wet sheet to dry the sheet, or the wet sheet may be heated and pressurized in a wet state without performing the ventilation drying treatment.

In the case of using the wet molding method, an acrylic emulsion using polyvinyl alcohol (PVA) can be selected as the organic binder.

Examples of the method for manufacturing a heat-insulating material having concave portions and convex portions by the wet molding method include a method of press-molding a wet sheet using a mold having a concave and convex shape before heating and pressurization.

### (Method for Manufacturing Covering material)

As the covering material, the above polymer films or metal films of general purpose manufactured with a desired thickness can be used, and by press molding using a mold having a concave and convex shape, concave and convex portions can be formed on the films.

### (Method for Manufacturing Heat Transfer Suppression Sheet)

The heat transfer suppression sheet according to the present embodiment can be manufactured, for example, by applying an adhesive to the heat-insulating material or the covering material obtained as described above and bonding the heat-insulating material to the covering material.

### [2. Battery Pack]

A battery pack according to the present embodiment is a battery pack in which battery cells are connected in series or in parallel, and the heat transfer suppression sheet for a battery pack according to the present embodiment is interposed between the battery cells. Specifically, for example, as shown in Fig. 3, in the battery pack 100, battery cells 20 are disposed side by side, connected in series or in parallel and accommodated in the battery case 30, and the heat transfer suppression sheets 10 are interposed between the battery cells 20.

In such a battery pack 100, since the heat transfer suppression sheet 10 is interposed between the battery cells 20, the individual battery cells 20 can be cooled during normal use.

Even when one of battery cells 20 has thermal runaway and reaches a high temperature, swells, or catches fire, due to the heat transfer suppression sheet 10 according to the present embodiment, propagation of heat between the battery cells 20 can be suppressed. Therefore, the chain of thermal runaway can be prevented, and adverse effects on the battery cell 20 can be minimized.

Although various embodiments have been described above with reference to the drawings, it is needless to say that the present invention is not limited to such examples. It is apparent to those skilled in the art that various changes and modifications can be conceived within the scope of the claims, and it is understood that such changes and modifications are also encompassed within the technical scope of the present invention.

### REFERENCE SIGNS LIST

10, 50, 60 heat transfer suppression sheet for battery pack
11, 21, 31, 51 heat-insulating material
12, 52 covering material
13a, 13c, 13d, 53a concave portion
13b, 53b convex portion
14 gap
20 battery cell
30 battery case
100 battery pack

## Claims

1. A heat transfer suppression sheet (10; 50; 60) for a battery pack (100), the heat transfer suppression sheet (10; 50; 60) being used in a battery pack (100) in which battery cells (20) are connected in series or in parallel and being interposed between the battery cells (20), the heat transfer suppression sheet (10; 50; 60) comprising:
a heat-insulating material (11; 21; 31; 51) containing at least one of inorganic particles or inorganic fibers; and
a covering material (12; 52) covering at least a part of the heat-insulating material (11; 21; 31; 51), wherein
a gap (14) is formed between the heat-insulating material (11; 21; 31; 51) and the covering material (12; 52),
the gap (14) communicates with the outside of the heat-insulating material (11; 21; 31; 51) and the covering material (12; 52),
**characterized in that**
the covering material (12; 52) covers a part of a cross section of the heat-insulating material (11; 21; 31; 51) or an entire cross section of the heat-insulating material (11; 21; 31; 51) in addition to a surface and a back surface of the heat-insulating material (11; 21; 31; 51).

2. The heat transfer suppression sheet (10; 50; 60) for a battery pack (100) according to claim 1, wherein
at least one of the inorganic particles or the inorganic fibers contained in the heat-insulating material (11; 21; 31; 51) contains a material that releases moisture when heated.

3. The heat transfer suppression sheet (10; 50; 60) for a battery pack (100) according to claim 1 or 2, wherein
the covering material (12; 52) is formed of a polymer film or a metal plate.

4. A battery pack (100) in which battery cells (20) are connected in series or in parallel, wherein
the heat transfer suppression sheet (10; 50; 60) for a battery pack (100) according to any one of claims 1 to 3 is interposed between the battery cells (20).

## Patentansprüche

1. Wärmeübertragungsunterdrückungsfolie (10; 50; 60) für einen Batteriepack (100), wobei die Wärmeübertragungsunterdrückungsfolie (10; 50; 60) in einem Batteriepack (100) verwendet wird, in dem Batteriezellen (20) in Reihe oder parallel geschaltet sind, und zwischen den Batteriezellen (20) angeordnet ist, wobei die Wärmeübertragungsunterdrückungsfolie (10; 50; 60) umfasst:
ein wärmeisolierendes Material (11; 21; 31; 51), das mindestens eines von anorganischen Partikeln oder anorganischen Fasern enthält; und
ein Abdeckmaterial (12; 52), das zumindest einen Teil des wärmeisolierenden Materials (11; 21; 31; 51) bedeckt, wobei
ein Spalt (14) zwischen dem wärmeisolierenden Material (11; 21; 31; 51) und dem Abdeckmaterial (12; 52) gebildet ist,
der Spalt (14) mit der Außenseite des wärmeisolierenden Materials (11; 21; 31; 51) und des Abdeckmaterials (12; 52) in Verbindung steht,
**dadurch gekennzeichnet, dass**
das Abdeckmaterial (12; 52) einen Teil eines Querschnitts des wärmeisolierenden Materials (11; 21; 31; 51) oder einen gesamten Querschnitt des wärmeisolierenden Materials (11; 21; 31; 51) zusätzlich zu einer Oberfläche und einer Rückfläche des wärmeisolierenden Materials (11; 21; 31; 51) abdeckt.

2. Wärmeübertragungsunterdrückungsfolie (10; 50; 60) für einen Batteriepack (100) gemäß Anspruch 1, wobei
mindestens eines der anorganischen Partikel oder der anorganischen Fasern, die in dem wärmeisolierenden Material (11; 21; 31; 51) enthalten sind, ein Material enthält, das bei Erwärmung Feuchtigkeit abgibt.

3. Wärmeübertragungsunterdrückungsfolie (10; 50; 60) für einen Batteriepack (100) gemäß Anspruch 1 oder 2, wobei
das Abdeckmaterial (12; 52) aus einer Polymerfolie oder einer Metallplatte gebildet ist.

4. Batteriepack (100), bei dem Batteriezellen (20) in Reihe oder parallel geschaltet sind, wobei
die Wärmeübertragungsunterdrückungsfolie (10; 50; 60) für einen Batteriepack (100) gemäß mindestens einem der Ansprüche 1 bis 3 zwischen die Batteriezellen (20) angeordnet ist.

## Revendications

1. Feuille de suppression de transfert de chaleur (10 ; 50 ; 60) pour un bloc-batterie (100), la feuille de suppression de transfert de chaleur (10 ; 50 ; 60) étant utilisée dans un bloc-batterie (100) dans lequel des cellules (20) de batterie sont connectées en série ou en parallèle et étant interposée entre les cellules (20) de batterie, la feuille de suppression de transfert de chaleur (10 ; 50 ; 60) comprenant :
un matériau isolant thermique (11 ; 21 ; 31 ; 51) contenant au moins un des éléments parmi des particules inorganiques ou des fibres inorganiques ; et
un matériau de revêtement (12 ; 52) couvrant au moins une partie du matériau isolant thermique (11 ; 21 ; 31 ; 51), dans laquelle
un intervalle (14) est formé entre le matériau isolant thermique (11 ; 21 ; 31 ; 51) et le matériau de revêtement (12 ; 52),
l'intervalle (14) communique avec l'extérieur du matériau isolant thermique (11 ; 21 ; 31 ; 51) et le matériau de revêtement (12 ; 52),
**caractérisée en ce que**
le matériau de revêtement (12 ; 52) couvre une partie d'une section transversale du matériau isolant thermique (11 ; 21 ; 31 ; 51) ou une section transversale entière du matériau isolant thermique (11 ; 21 ; 31 ; 51) en plus d'une surface et d'une surface arrière du matériau isolant thermique (11 ; 21 ; 31 ; 51),

2. Feuille de suppression de transfert de chaleur (10 ; 50 ; 60) pour un bloc-batterie (100) selon la revendication 1, dans laquelle
au moins un élément des particules inorganiques ou des fibres inorganiques contenues dans le matériau isolant thermique (11 ; 21 ; 31 ; 51) contient un matériau qui libère de l'humidité lorsqu'il est chauffé.

3. Feuille de suppression de transfert de chaleur (10 ; 50 ; 60) pour un bloc-batterie (100) selon la revendication 1 ou la revendication 2, dans laquelle le matériau de revêtement (12 ; 52) est formé d'un film polymère ou d'une plaque métallique.

4. Bloc-batterie (100) dans lequel les cellules (20) de batterie sont connectées en série ou en parallèle, dans lequel
la feuille de suppression de transfert de chaleur (10 ; 50 ; 60) pour un bloc-batterie (100) selon l'une quelconque des revendications 1 à 3 est interposée entre les cellules (20) de batterie.
